# EUROPÄISCHE PATENTSCHRIFT

(11) **EP 1 291 611 B1**
(45) Veröffentlichungstag und Bekanntmachung des Hinweises auf die Patenterteilung: **03.11.2004**
(21) Anmeldenummer: 02019798.4
(22) Anmeldetag: 05.09.2002
(51) Int. Cl.: F42B 3/04, B60R 21/26, B60R 22/46

(54) **Hybrid-Gasgenerator**
Hybrid gas generator
Générateur de gaz hybride

(30) Priorität: 05.09.2001 DE 20114665 U
(43) Veröffentlichungstag der Anmeldung: 12.03.2003
(73) Patentinhaber: TRW Airbag Systems GmbH, 84544 Aschau am Inn (DE)
(72) Erfinder: Dölling, Uwe, 84539 Ampfing (DE); Seidl, Lorenz, 84478 Waldkraiburg (DE); Bergmann, Maximilian, 84453 Mühldorf/Inn (DE); Gerstner, Alexander, 84478 Waldkraiburg (DE); Hofmann, Achim, Dr., 84570 Polling (DE); Esau, Anja, 84539 Ampfing (DE); Zengerle, Werner, 93057 Regensburg (DE); Holzapfel, Jens, 18258 Klein Grenz (DE); Henning, Nils, 18059 Rostock (DE)
(74) Vertreter: Kitzhofer, Thomas, Dipl.-Ing.

(56) Entgegenhaltungen:
- US-A- 5 854 441
- US-A- 5 941 561

## Beschreibung

Die Erfindung betrifft einen Hybrid-Gasgenerator, mit einem langgestreckten zylindrischen Außengehäuse, einer mit Druckgas gefüllten Druckkammer, die durch eine stirnseitige Membrane geschlossen ist, einem zum Öffnen der Membrane vorgesehenen pyrotechnischen Treibsatz, der in einem mit dem Außengehäuse außerhalb der Druckkammer verbundenen, vorzugsweise buchsenförmigen Treibsatzgehäuse untergebracht ist, welches sich mit seiner Längsachse rechtwinklig zur Längsachse des Außengehäuses erstreckt, und einer an einem axialen Ende des Außengehäuses vorgesehenen axialen Ausströmöffnung.

Solch ein Hybrid-Gasgenerator ist z.B aus der US-A 5 854 441 bekannt.

Solche Gasgeneratoren werden beispielsweise zum Aufblasen eines Gassacks oder zum Betätigen eines Gurtstraffers verwendet. Durch die axiale, stirnseitige Ausströmöffnung wird der radiale Bauraum gegenüber Generatoren mit radialen Ausströmöffnungen gering gehalten.

Die Erfindung schafft einen Hybrid-Gasgenerator, der einfach aufgebaut ist und sich durch einen geringen radialen Bauraum auszeichnet. Der Hybrid-Gasgenerator der eingangs genannten Art sieht hierzu vor, daß das Außengehäuse eine Umfangswand mit einer radialen Einstecköffnung zum Einführen des Treibsatzgehäuses hat, wobei das Treibsatzgehäuse an einem der Einstecköffnung diametral gegenüberliegenden Abschnitt der Umfangswand wenigstens gegen Verschieben in Richtung der Längsachse des Außengehäuses befestigt ist. Beim Hybrid-Gasgenerator nach der Erfindung wird das buchsenförmige Treibsatzgehäuse radial ganz in das Außengehäuse gesteckt, bis es an dem der Einstecköffnung gegenüberliegenden Abschnitt anliegt, wo es dann auch befestigt wird, um durch das Gas beim Ausströmen nicht seitlich verschoben zu werden. Beim Öffnen der Druckkammer strömt das Gas dann seitlich am Treibsatzgehäuse, zwischen diesem und dem Außengehäuse, entlang in Richtung zur axialen Ausströmöffnung. Indem das Treibsatzgehäuse vollständig in das Außengehäuse eingeschoben ist, steht es nur noch geringfügig aus diesen heraus, was Bauraum spart. Zudem wird durch die Befestigung an der Umfangswand eine stabile Halterung des Treibsatzgehäuses erreicht, das dann an zwei Stellen, nämlich im Bereich des Randes der Einstecköffnung und am gegenüberliegenden Abschnitt der Umfangswand arretiert ist. Das Treibsatzgehäuse ist durch eine Formschlußverbindung, eine Reibschlußverbindung, durch Kleben und/oder Schweißen an dem Abschnitt der Umfangswand befestigt, es bedarf also keiner aufwendigen Befestigungsmittel wie Gewinde oder dergleichen.

Der Rand der radialen Einstecköffnung ist als zylindrischer Führungshals ausgebildet, was die Lagestabilität des Treibsatzgehäuses verbessert, insbesondere bis zum Befestigen am Abschnitt der Umfangswand.

Das Treibsatzgehäuse hat vorzugsweise eine Stirnwand, mit der es an der Umfangswand anliegt und wo es mit dieser befestigt ist. Im Treibsatzgehäuse sind ein Zünder und ein zusätzlicher Treibsatz vorgesehen. Der zusätzliche Treibsatz produziert beim Abbrennen heißes Gas, das sich mit dem kalten Druckgas vermischen kann.

Das Treibsatzgehäuse hat wenigstens eine auf die Membrane gerichtete Öffnung, durch die Verbrennungsprodukte gezielt auf die Membrane gerichtet werden, um diese in vorbestimmbare Weise zu zerstören.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine erste Ausführungsform des erfindungsgemäßen Hybrid-Gasgenerators,
- Figur 2 eine Längsschnittansicht durch eine zweite Ausführungsform des erfindungsgemäßen Hybrid-Gasgenerators,
- Figur 3 einen Querschnitt durch den Gasgenerator nach Figur 2 längs der Linie III-III,
- Figur 4 eine Längsschnittansicht durch eine dritte Ausführungsform des erfindungsgemäßen Hybrid-Gasgenerators und
- Figur 5 eine Längsschnittansicht durch eine vierte Ausführungsform des erfindungsgemäßen Hybrid-Gasgenerators.

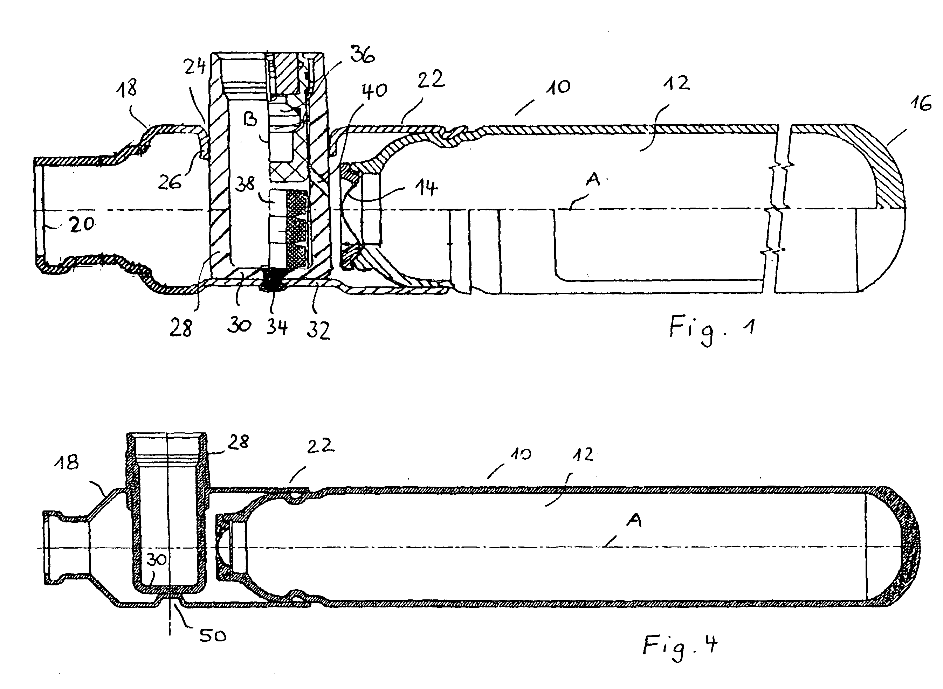

In Figur 1 ist ein Hybrid-Gasgenerator gezeigt, der ein langgestrecktes zylindrisches Außengehäuse 10 und eine mit Druckgas gefüllte Druckkammer 12 aufweist, die stirnseitig mit einer Membrane 14 geschlossen ist. Die Druckkammer 12 ist durch einen flaschenförmigen Behälter 16 gebildet, der zum Teil das Außengehäuse des Gasgenerators definiert. Auf dem Behälter 16 ist am membranseitigen Ende eine Hülse 18 aufgesetzt und mit dem Behälter 16 durch Rollieren oder Schweißen verbunden. Die Hülse 18 ist an dem der Membrane 14 entgegengesetzten Ende stimseitig offen, wobei die Öffnung eine axiale Ausströmöffnung 20 bildet. Das Außengehäuse hat folglich eine offene Stirnseite, eine durch die Stirnwand des Behälters 16 entgegengesetzte, geschlossene Stirnseite sowie eine durch die Hülse 18 und den Mantel des Behälters 16 definierte Umfangswand 22. Nahe der Membrane 14 und außerhalb der Brennkammer 12 hat die Hülse 18 eine radiale Einstecköffnung 24, deren Rand einwärts zu einem zylindrischen Führungshals 26 umgeformt ist. In die Einstecköffnung 24 ist ein buchsenförmiges, aus einem separaten Teil gebildetes Treibsatzgehäuse 28 so tief eingeführt, bis seine Stirnwand 30 einen der Einstecköffnung 24 diametral gegenüberliegenden Abschnitt 32 der Hülse 18 und damit die Umfangswand 22 berührt. In diesem Bereich sind Außengehäuse 10 und Treibsatzgehäuse 28 durch eine Schweißnaht 34 miteinander verbunden. Im Bereich des Führungshalses 26 ist keine zusätzliche Befestigung des Treibsatzgehäuses 28 und des Außengehäuses 10 vorgesehen.

Wie in Figur 1 zu erkennen ist, stehen die Achsen A und B des Außengehäuses 10 bzw. des Treibsatzgehäuses 28 senkrecht aufeinander und schneiden sich.

Im Treibsatzgehäuse sind ein Zünder 36 und ein pyrotechnischer Treibsatz 38 untergebracht. Eine schräge Ausströmöffnung 40 durchdringt das Treibsatzgehäuse 28 und ist auf die Membrane 14 gerichtet.

Das Aktivieren des Zünders 36 führt zum Verbrennen des Treibsatzes 38. Entstehendes heißes Gas strömt über die Öffnung 40 auf die Membrane 14, die thermisch zerstört oder soweit geschwächt wird, daß sie birst. Das Druckgas strömt aus der Druckkammer 12 und vermischt sich mit dem heißen Gas in der Hülse 18. Das Gasgemisch strömt seitlich zwischen dem Treibsatzgehäuse 28 und der Hülse 18 entlang zur Ausströmöffnung 20, wo es den Gasgenerator in axialer Richtung verläßt.

Der gezeigte Gasgenerator ist aus wenigen Teilen und sehr einfach zusammengesetzt; die Verschweißung 34 kann von außerhalb des Außengehäuses 10 erfolgen.

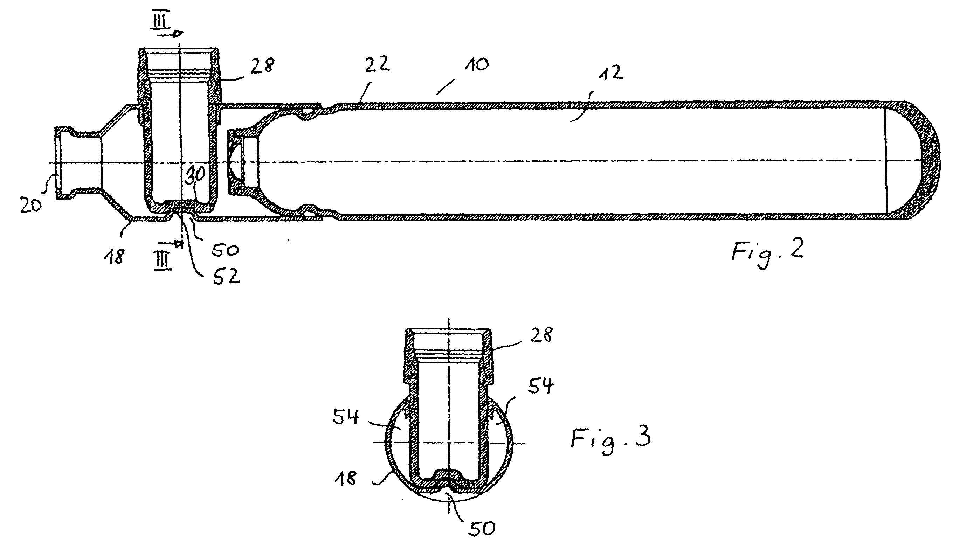

Die Ausführungsform nach Figur 2 entspricht im wesentlichen der nach Figur 1, weshalb für funktionsgleiche Teile auch die bereits eingeführten Bezugszeichen verwendet werden. Im folgenden wird deshalb nur noch auf die Unterschiede zwischen beiden Gasgeneratoren eingegangen.

Die Befestigung des Treibsatzgehäuses 28 an dem Außengehäuse 10 erfolgt durch eine nur in Richtung der Achse A wirkende formschlüssige Verbindung, indem ein radial einwärts gerichteter Vorsprung 50 in der Hülse 18 in eine Einbuchtung 52 der Stirnwand 30 ragt. In Figur 3 sind mit 54 die beiden seitlich des Treibsatzgehäuses 28 zwischen diesem und der Hülse 18 vorgesehenen Kanäle bezeichnet, über die das freigesetzte Druckgas zur Ausströmöffnung 20 gelangt, wenn es die Druckkammer 12 verlassen hat.

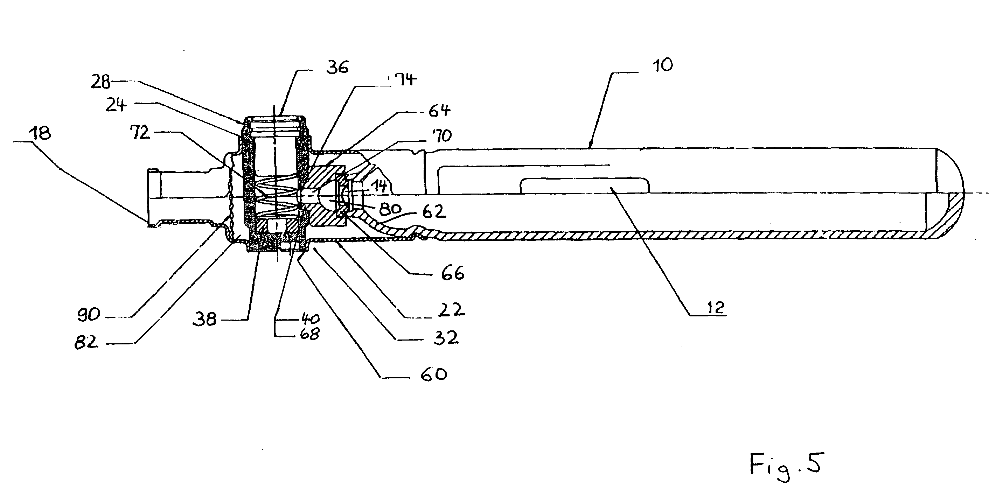

Bei der Ausführungsform nach Figur 4 hat die Stirnwand 30 keine Einbuchtung, sie liegt aber an dem Vorsprung 52 an und ist an diesem durch Kleben befestigt.

Der Treibsatz 38 kann gegebenenfalls weggelassen werden, so daß das Öffnen der Membrane 14 nur durch den im Zünder 36 vorgesehenen pyrotechnischen Treibsatz erfolgt.

Bei der Ausführungsform nach Figur 5 hat die Umfangswand 22 am gegenüberliegenden Abschnitt 32 ein Durchgangsloch 60, das mit der Einstecköffnung 24 fluchtet und vorzugsweise minimal kleiner ist als dieses. Das Treibsatzgehäuse 28 wird von oben in die Einstecköffnung 24 und das Durchgangsloch 60 (ebenfalls mit einem Führungshals ausgestattet) gesteckt und ist in diesem durch Preßpassungen fixiert. Die Preßpassungen könnten auch als Spiel- oder Übergangspassungen ausgeführt sein, wenn Leckageströme erlaubt sind. In diesem Fall wird aber das Verschieben des Treibsatzgehäuses 28 in Einsteckrichtung nur durch den im folgenden erläuterten Abstandhalter 64 verhindert.

Die Druckkammer 12 hat eine dem Treibsatzgehäuse 28 zugewandte Stirnwand 62. Zwischen dem Treibsatzgehäuse 28 und der Stirnwand 62 ist im Inneren des Außengehäuses 10 ein Abstandhalter 64 vorgesehen, der einerseits am Membranhalter 66 befestigt ist und andererseits mit einem Fortsatz 68 in die radiale Öffnung 40 eingesteckt ist.

Der Abstandhalter 64 ist hohl und bildet einen Kanal 70 vom Inneren des Treibsatzgehäuses 28 bis zur Membrane 14. Gas, das beim Aktivieren des Zünders 36 und des davon durch eine Feder 72 beabstandeten Treibsatzes 38 entsteht, verläßt das Treibsatzgehäuse 28 und wird auf die Membrane 14 gerichtet, um sie zu zerstören. Vor der Membrane 14 endet der Kanal 70 in einer Querbohrung 80, die den Kanal 70 mit dem Raum 82 strömungsmäßig verbindet. Über die Querbohrung 80 verläßt das Gas aus der Druckkammer 12 den Behälter 16. Mit 90 ist eine Filterscheibe vor der Ausströmöffnung 20 bezeichnet. Der Einlaß des Kanals 70 ist durch eine Verdämmung 74 vor der Aktivierung des Zünders 36 geschlossen.

Neben der Sicherung des Treibsatzgehäuses 28 gegen axiales Verschieben und der Ausrichtung des Gases hat der Abstandhalter 64 noch eine weitere Funktion, nämlich den Abstand zwischen Treibsatzgehäuse 28 und Membrane 14 bei der Fertigung genau festzulegen. Nach Einstecken des Treibsatzgehäuses 28 in die Umfangswand 22 wird, bezogen auf die Figuren, der Behälter 16 mit dem Membranhalter 66 und dem Abstandhalter 64 über die rechte offene Stirnseite in die Hülse 18 eingeführt, bis der Fortsatz 68 in die Öffnung 40 eingedrungen ist. Anschließend werden Hülse 18 und Behälter 16 durch Rollen miteinander verbunden, wobei während des Rollens der Behälter 16 mit Abstandhalter 64 gegen das Treibsatzgehäuse 28 gedrückt werden.

## Patentansprüche

1. Hybrid-Gasgenerator, mit
einem langgestreckten zylindrischen Außengehäuse,
einer mit Druckgas gefüllten Druckkammer (12), die durch eine stirnseitige Membrane (14) geschlossen ist,
einem zum Öffnen der Membrane (14) vorgesehenen pyrotechnischen Treibsatz (38), der in einem mit dem Außengehäuse (10) außerhalb der Druckkammer (12) verbundenen, vorzugsweise buchsenförmigen Treibsatzgehäuse (28) untergebracht ist, welches sich mit seiner Längsachse (B) rechtwinklig zur Längsachse (A) des Außengehäuses (10) erstreckt,
einer an einem axialen Ende des Außengehäuses (10) vorgesehenen axialen Ausströmöffnung (20), und wobei
das Außengehäuse eine Umfangswand (22) mit einer radialen Einstecköffnung (24) zum Einführen des Treibsatzgehäuses (28) hat,
**dadurch gekennzeichnet, daß** das Treibsatzgehäuse (28) an einem der Einstecköffnung (24) diametral gegenüberliegenden Abschnitt (32) der Umfangswand (22) wenigstens gegen Verschieben in Richtung der Längsachse (A) des Außengehäuses (10) befestigt ist.

2. Hybrid-Gasgenerator nach Anspruch 1, **dadurch gekennzeichnet, daß** das Treibsatzgehäuse (28) durch eine Formschlußverbindung, eine Reibschlußverbindung, durch Kleben und/oder Schweißen an dem Abschnitt (32) der Umfangswand (22) befestigt ist.

3. Hybrid-Gasgenerator nach Anspruch 1 oder 2, **dadurch gekennzeichnet, da**ß der Rand der Einstecköffnung (24) als zylindrischer Führungshals (26) ausgebildet ist.

4. Hybrid-Gasgenerator nach einem der vorhergehenden Ansprüche, **dadurch gekennzeichnet, daß** das Treibsatzgehäuse (28) eine Stirnwand (30) hat, mit der es an der Umfangwand anliegt.

5. Hybrid-Gasgenerator nach einem der vorhergehenden Ansprüche, **dadurch gekennzeichnet, daß** im Treibsatzgehäuse (28) ein Zünder (36) und ein zusätzlicher Treibsatz (38) vorgesehen sind.

6. Hybrid-Gasgenerator nach einem der vorhergehenden Ansprüche, **dadurch gekennzeichnet, daß** das Treibsatzgehäuse (28) wenigstens eine auf die Membrane (14) gerichtete Öffnung hat.

7. Hybrid-Gasgenerator nach einem der vorhergehenden Ansprüche, **dadurch gekennzeichnet, daß** die Umfangswand (22) am gegenüberliegenden Abschnitt (32) ein Loch (60) hat, in das das Treibsatzgehäuse (28) gesteckt ist.

8. Hybrid-Gasgenerator nach einem der vorhergehenden Ansprüche, **dadurch gekennzeichnet, daß** die Druckkammer (12) eine dem Treibsatzgehäuse (28) zugewandte Stirnwand (62) hat und zwischen dem Treibsatzgehäuse (28) und der Stirnwand (62) im Inneren des Außengehäuses ein Abstandhalter (64) vorgesehen ist, welcher am Treibsatzgehäuse (28) angreift.

9. Hybrid-Gasgenerator nach Anspruch 8, **dadurch gekennzeichnet, daß** der Abstandhalter (64) hohl ist und einen Kanal (70) zwischen dem Treibsatzgehäuse (28) und der Membrane (14) bildet, so daß Gas, das das Treibsatzgehäuse (28) verläßt, auf die Membrane (14) gerichtet wird.

10. Hybrid-Gasgenerator nach Anspruch 8 oder 9, **dadurch gekennzeichnet, daß** der Abstandhalter (64) und das Treibsatzgehäuse (28) so formschlüssig miteinander verbunden sind, daß der Abstandhalter (64) als Sicherung gegen Verschieben des Treibsatzgehäuses (28) in Einsteckrichtung dient.

## Claims

1. A hybrid gas generator comprising
an elongated cylindrical outer housing,
a pressure chamber (12) that is filled with pressurized gas and is closed off by a membrane (14) on the end face,
a pyrotechnical propellant charge (38) that is provided for opening the membrane (14) and is accommodated in a preferably bushing-shaped propellant charge housing (28) that is connected to the outer housing (10) outside of the pressure chamber (12) and the longitudinal axis (B) of which extends at right angles to the longitudinal axis (A) of the outer housing (10),
an axial outflow opening (20) provided at one axial end of the outer housing (10), and
the outer housing having a circumferential wall (22) with a radial insertion opening (24) for introducing the propellant charge housing (28),
**characterized in that**
the propellant charge housing (28) is attached to a section (32) of the circumferential wall (22) that is diametrically opposed to the insertion opening (24) so as to be secured at least against displacement in the direction of the longitudinal axis (A) of the outer housing (10).

2. The hybrid gas generator according to Claim 1, **characterized in that** the propellant charge housing (28) is attached to the section (32) of the circumferential wall (22) by means of an interlocking fit, a frictional engagement, by gluing and/or welding.

3. The hybrid gas generator according to Claim 1 or 2, **characterized in that** the edge of the insertion opening (24) is configured as a cylindrical guide neck (26).

4. The hybrid gas generator according to any of the preceding claims, **characterized in that** the propellant charge housing (28) has an end wall (30) by which it lies against the circumferential wall.

5. The hybrid gas generator according to any of the preceding claims, **characterized in that** an igniter (36) and an additional propellant charge (38) are provided in the propellant charge housing (28).

6. The hybrid gas generator according to any of the preceding claims, **characterized in that** the propellant charge housing (28) has at least one opening oriented towards the membrane (14).

7. The hybrid gas generator according to any of the preceding claims, **characterized in that** at the opposite section (32) the circumferential wall (22) has a hole (60) in which the propellant charge housing (28) is inserted.

8. The hybrid gas generator according to any of the preceding claims, **characterized in that** the pressure chamber (12) has an end wall (62) facing the propellant charge housing (28) and a spacer (64) is provided inside the outer housing between the propellant charge housing (28) and the end wall (62), the spacer engaging the propellant charge housing (28).

9. The hybrid gas generator according to Claim 8, **characterized in that** the spacer (64) is hollow and forms a conduit (70) between the propellant charge housing (28) and the membrane (14), so that gas leaving the propellant charge housing (28) is directed onto the membrane (14).

10. The hybrid gas generator according to Claim 8 or 9, **characterized in that** the spacer (64) and the propellant charge housing (28) are connected to each other with an interlocking fit such that the spacer (64) serves to lock the propellant charge housing (28) against displacement in the direction of insertion.

## Revendications

1. Générateur de gaz hybride comportant
un boîtier extérieur cylindrique allongé,
une chambre de pression (12) remplie de gaz sous pression, qui est fermée par une membrane (14) côté frontal,
une charge de propulsion (38) pyrotechnique prévue pour ouvrir la membrane (14), qui est logée dans un boîtier (28) de charge propulsive, de préférence en forme de douille et reliée au boîtier extérieur (10) en dehors de la chambre de pression (12), lequel s'étend avec son axe longitudinal (B) perpendiculairement à l'axe longitudinal (A) du boîtier extérieur (10),
un orifice de sortie (20) axial prévu à une extrémité axiale du boîtier extérieure (10), et
le boîtier extérieur ayant une paroi périphérique (22) avec une ouverture d'insertion (24) pour introduire le boîtier (28) de charge propulsive,
**caractérisé en ce que** le boîtier (28) de charge propulsive est fixé sur un tronçon (32) de la paroi périphérique (22), qui est diamétralement opposé à l'ouverture d'insertion (24), pour l'assurer au moins contre le déplacement en direction de l'axe longitudinal (A) du boîtier extérieur (10).

2. Générateur de gaz hybride selon la revendication 1, **caractérisé en ce que** le boîtier (28) de charge propulsive est fixé au tronçon (32) de la paroi périphérique (22) par une liaison par coopération de formes, par un engagement par friction, par collage et/ou par soudage.

3. Générateur de gaz hybride selon la revendication 1 ou 2, **caractérisé en ce que** le bord de l'ouverture d'insertion (24) est réalisée sous forme de col de guidage (26) cylindrique.

4. Générateur de gaz hybride selon l'une des revendications précédentes, **caractérisé en ce que** le boîtier (28) de charge propulsive a une paroi frontale (30) par laquelle il est en appui sur la paroi périphérique.

5. Générateur de gaz hybride selon l'une des revendications précédentes, **caractérisé en ce que** dans le boîtier (28) de charge propulsive sont prévues une amorce (36) et une charge propulsive (38) additionnelle.

6. Générateur de gaz hybride selon l'une des revendications précédentes, **caractérisé en ce que** le boîtier (28) de charge propulsive a au moins une ouverture dirigée vers la membrane (14).

7. Générateur de gaz hybride selon l'une des revendications précédentes, **caractérisé en ce que** la paroi périphérique (22) a un trou (60) sur le tronçon opposé (32), dans lequel est enfiché le boîtier (28) de charge propulsive.

8. Générateur de gaz hybride selon l'une des revendications précédentes, **caractérisé en ce que** la chambre de pression (12) a une paroi frontale (62) tournée vers le boîtier (28) de charge propulsive, et **en ce qu'**un espaceur (64) est prévu à l'intérieur du boîtier extérieur entre le boîtier (28) de charge propulsive et la paroi frontale (62), l'espaceur s'engageant sur le boîtier (28) de charge propulsive.

9. Générateur de gaz hybride selon la revendication 8, **caractérisé en ce que** l'espaceur (64) est creux et forme un canal (70) entre le boîtier (28) de charge propulsive et la membrane (14), de sorte que du gaz qui quitte le boîtier (28) de charge propulsive est dirigé sur la membrane (14).

10. Générateur de gaz hybride selon la revendication 8 ou 9, **caractérisé en ce que** l'espaceur (64) et le boîtier (28) de charge propulsive sont reliés l'un à l'autre par coopération de formes de telle sorte que l'espaceur (64) sert de sécurité antidéplacement du boîtier (28) de charge propulsive en direction d'insertion.
